# EUROPEAN PATENT SPECIFICATION

(11) **EP 4 588 233 B1**
(45) Date of publication and mention of the grant of the patent: **17.06.2026**
(21) Application number: 23776678.7
(22) Date of filing: 12.09.2023
(51) Int. Cl.: H04L 67/12, H04L 67/565, H04L 69/08, G05D 1/00, G07C 5/00

(54) **PROVIDING OUTPUT TO A USER OF A REMOTE DEVICE**
AUSGABE AN EINEN BENUTZER EINES ENTFERNTEN GERÄTS
FOURNIR UNE SORTIE À L'UTILISATEUR D'UN DISPOSITIF À DISTANCE

(30) Priority: 13.09.2022 GB 202213343
(43) Date of publication of application: 23.07.2025
(73) Proprietor: Oxa Autonomy Ltd, Oxford OX4 2HW (GB)
(72) Inventor: TURNER, Adam, Oxford Oxfordshire OX4 2HW (GB)
(74) Representative: Appleyard Lees IP LLP
(86) International application number: PCT/GB2023/052360
(87) International publication number: WO 2024/057011

(56) References cited:
- US-A1- 2011 055 292
- US-A1- 2014 121 891
- US-A1- 2014 188 305

## Description

### FIELD

The present disclosure relates to a system for providing output to a user of a remote device, a processor assembly for a system for providing output to a user of a remote device, a remote device, and a method. The present disclosure also relates to a system for providing input to a processor assembly from a remote device, a processor assembly for a system for providing input to a processor assembly from a remote device, a remote device, and a method.

### BACKGROUND

A self-driving vehicle, also known as an autonomous vehicle (AV), is a vehicle that is capable of sensing its environment and moving safely with little or no human input. There are numerous challenges faced by the developers of AV technology.

Where control of an AV is shared with a user, such as a safety driver, it is necessary for the safety driver to understand the current operation state of the AV. Furthermore, it is beneficial for the safety driver to be able to interact with the vehicle.

However, the interaction between the safety driver and AV is often vehicle- and/or domain-specific. Typically, a vehicle-specific state is reported to a remote device used by the safety driver, and the vehicle-specific state must be decoded and handled at the remote device in order to provide useful information output to the safety driver.

In view of the above, in order to decode and handle vehicle-specific states from different types of vehicles, the remote device must be configured to process vehicle-specific states in a plurality of ways, due to the differing vehicle types. The processing at the remote device is thus complex.

Alternatively, a plurality of remote devices may be required, each adapted to decode and handle the information provided from a particular vehicle type. High cost and burden on the safety driver thus results.

It is an object of the present invention to provide an improved system, processor assembly, remote device and/or method and/or address one or more of the problems discussed above, or discussed elsewhere, or to at least provide an alternative system, processor assembly, remote device and/or method.

Prior art also includes US2014121891A1 which describes communication of signals between mobile devices and automotive Controller Area Network (CAN) buses. An abstraction and communication device of US2014121891A1 includes a connector, a mapping platform, and a transceiver. The connector of US2014121891A1 is adapted to interface with an automotive CAN bus that communicates data signals in a first automobile-specific format with components of an automobile. The mapping platform of US2014121891A1 is configured to convert a data signal from the first automobile-specific format into a mobile device format defined by an Application Programming Interface (API). Additionally, the transceiver of US2014121891A1 is configured to wirelessly and securely communicate the data signal in the mobile device format to a mobile device.

Prior art also includes US2014188305A1 which describes systems and methods for hardware-agnostic communication between one or more mobile data terminals and one or more vehicle logic units, where a vehicle logic unit of US2014188305A1 can communicate with one or more inputs from a transit industry vehicle and create an abstraction interface capable of being processed by multiple mobile data terminal hardware platforms-meaning that each vehicle logic unit of US2014188305A1 can communicate with multiple mobile data terminals, and each mobile data terminal of US2014188305A1 can communicate with multiple vehicle logic units.

Prior art also includes US2011055292A1 which describes a gateway system includes a vehicle network having a network data, a processor for extracting the network data from the vehicle network and converting the network data into a standardized data having an open source format, and a broadcaster in communication with the processor to receive the standardized data and transmit the standardized data to a user device, wherein the user device for use thereby.

### SUMMARY

The invention is defined in the claims that follow.

Other preferred and advantageous features of the invention will be apparent from the following description.

### BRIEF DESCRIPTION OF THE FIGURES

Embodiments of the invention will now be described by way of example only with reference to the figures, in which:
Figure 1 shows a system comprising a remote device and a processor assembly;
Figure 2 shows a processor assembly;
Figure 3 shows a remote device;
Figure 4 shows general methodology principles;
Figure 5 shows a system comprising a remote device and a processor assembly;
Figure 6 shows a processor assembly;
Figure 7 shows a remote device; and
Figure 8 shows general methodology principles.

### DETAILED DESCRIPTION

Various systems are described herein. In general, it is one aim of the present invention to enable vehicle-specific data to be processed to provide the vehicle-specific data in a vehicle-agnostic format to a user interface. It is another aim of the present invention to enable vehicle-agnostic information to be provided from a remote device to a vehicle, where the vehicle-agnostic information can be processed as an input related to (e.g., specific to) the vehicle.

Furthermore, it is an aim of the present invention to provide a domain-agnostic user interface. Here, the term "domain" means the operational domain of a vehicle, which may refer to the environment in which the vehicle is operational and the activity that the vehicle is carrying out. For example, the domain may be public roads, or an off-road site, such as a mine, and the activity may be delivery or low-speed transport. Advantageously, the domain-agnostic user interface enables display of different information to a user/ remote operator depending on what the vehicle is doing.

It will be appreciated that whilst the various systems are described to each comprise a remote device and a processor assembly, benefits of the invention may be realised by providing remote devices or processor assemblies in isolation (e.g., not as part of a system). For example, benefits may be obtained in retrofit of such remote devices or processor assemblies in existing systems, such that some or all of the advantages of the invention may still be realised without provision of a complete system.

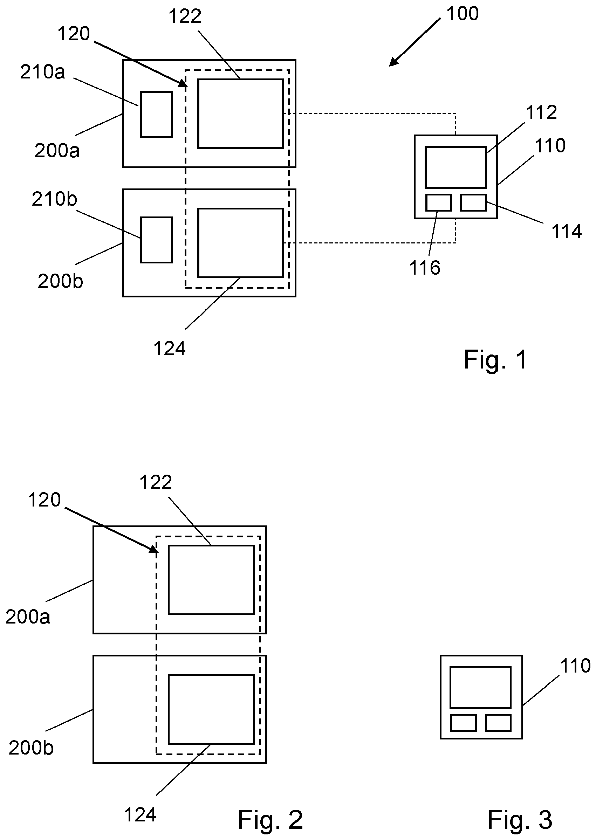

Referring to Figure 1, a system 100 is shown. The system 100 is for providing output to a user of a remote device.

The system 100 comprises a remote device 110 and a processor assembly 120. The processor assembly 120 comprises a first processor 122 and a second processor 124.

The first processor 122 is adapted to be provided at a first vehicle 200a. The first processor 122 is configured to receive data related to the first vehicle 200a. The first processor 122 is configured to process the data to obtain a vehicle-agnostic information. The first processor 122 is configured to provide the vehicle-agnostic information to the remote device 110.

The second processor 124 is adapted to be provided at a second vehicle 200b. The second processor 124 is configured to receive data related to the second vehicle 200b. The second processor 124 is configured to process the data to obtain a vehicle-agnostic information. The second processor 124 is configured to provide the vehicle-agnostic information to the remote device 110.

The remote device 110 is configured to receive the vehicle-agnostic information from the processor assembly 120 and provide an output to the user based on the vehicle-agnostic information. In this way, the remote device 110 is operable to provide output to a user without processing data related to the vehicle 200a, 200b.

In other words, providing output to a user without processing data related to the vehicle 200a, 200b may be said to be providing output to a user without the remote device 100 processing data in a manner that is specific to any particular vehicle. This will be appreciated by the skilled person from the description herein.

Advantageously, by such a system, it is not necessary for the remote device 110 to process vehicle-specific data. That is, instead of reporting a vehicle-specific information (e.g., information having a characteristic specific to a vehicle or a vehicle type) to the remote device 110 which it must then decode and handle to provide an output to the user based on said information, the decision of what to display is instead performed at the processor assembly 120. In this way, the remote device 110 need not know the type of the vehicle, and need not process the data provided to it in a vehicle-specific manner. This enables use of the richer information that the vehicle has about the interaction it requires with the user. Furthermore, this provides the advantage that the same remote device 110 can be used irrespective of types of vehicles in a vehicle fleet, such that the output is provided in a consistent manner to a user regardless of vehicle type, and a fleet of vehicles of a plurality of different types can be operated and monitored using the same remote device 110. Furthermore, the output is provided in a consistent manner to a user regardless of vehicle type and without compromising the relevance of the data being passed between the vehicle and the user.

The remote device 110 being configured to provide an output to the user based on the vehicle-agnostic information may mean that the content available to the user may be vehicle-specific, but it is formatted, or structured, in a vehicle-agnostic manner. In this way, the user can use the same mobile application across different vehicles (that support the mobile application) and still receive the tailored information that the user requires. In other words, vehicle-agnostic information may be related to the vehicle (e.g., a speed measurement) but it is provided to the mobile application in a vehicle-agnostic manner (e.g., display text in x format that reads "a current vehicle speed of X mph"). The provision of vehicle-agnostic information (e.g., display a current vehicle speed of X mph) is performed by the processor assembly 120 at the vehicle side. That is, any vehicle-specific processing of information happens at the vehicle side, and what is passed to the remote device 110 is vehicle-agnostic (e.g., "display current vehicle speed of X mph", rather than "display the current vehicle speed").

The remote device 110 may include at least one of, for example, a smartphone, a tablet personal computer (PC), a mobile phone, a desktop personal computer (PC), a laptop personal computer (PC), or a wearable device. Additionally, or alternatively, the remote device 110 may include a component on-board the vehicle or specific to a vehicle, such as a dashboard or infotainment module. That is, the remote device 110 may not be a device held by the user. In a specific example, a vehicle OEM may integrate a display for the system into the vehicle, using the vehicle-agnostic and domain-agnostic API.

The remote device 110 may provide a user interface (UI) through which the user may interact with the remote device 110. The remote device 110 may support a mobile application (referred to as an "app") with which the user interacts. The remote device 110 may comprise a screen 112 by which the user may interact with the app.

The first processor 122 is adapted to be provided at a first vehicle 200a. The first processor 122 may be provided at the first vehicle 200a. The first processor 122 may be provided at the first vehicle 200a by being incorporated therein.

The first processor 122 is configured to receive data related to the first vehicle 200a. The first processor 122 may be configured to receive data from a sub-system of the first vehicle 200a. The first processor 122 may be connected to a sub-system of the first vehicle 200a to receive data from the sub-system. The first processor 122 may receive data related to the first vehicle 200a wirelessly or via a wired connection.

The first processor 122 is configured to process the data to obtain a vehicle-agnostic information. In other words, the first processor 122 is configured to process data related to the first vehicle 200a, which may be data specific to the vehicle or vehicle type, and process the data to obtain a vehicle-agnostic information. A vehicle-agnostic information may otherwise be referred to as a vehicle-type-independent information. That is, the vehicle-agnostic information is not encoded in a manner specific to the vehicle or vehicle type. The vehicle-agnostic information may be provided in a format known to the remote device 110. Nevertheless, the vehicle-agnostic information processed by the processor assembly 120 may be information that is encoded in a vehicle-agnostic manner but still includes vehicle-specific content, parameters and/or characteristics.

The first processor 122 is configured to provide the vehicle-agnostic information to the remote device 110. The first processor 122 may provide the vehicle-agnostic information to the remote device 110 via a communication unit, which may form part of the processor assembly 120 or may be a separate unit.

The remote device 110 may comprise a communication unit 114 operable to receive the vehicle-agnostic information from the first processor 122.

The second processor 124 is adapted to be provided at a second vehicle 200b. The second processor 124 may be provided at the second vehicle 200b. The second processor 124 may be provided at the second vehicle 200b by being incorporated therein.

The second processor 124 is configured to receive data related to the second vehicle 200b. The second processor 124 may be configured to receive data from a sub-system of the second vehicle 200a. The second processor 124 may be connected to a sub-system of the second vehicle 200b to receive data from the sub-system. The sub-system of the first vehicle 200a and the sub-system of the second vehicle 200b may be the same type of sub-system. The second processor 124 may receive data related to the second vehicle 200b wirelessly or via a wired connection.

The second processor 124 is configured to process the data to obtain a vehicle-agnostic information. In other words, the second processor 124 is configured to process data related to the second vehicle 200b, which may be data specific to the vehicle or vehicle type, and process the data to obtain a vehicle-agnostic information. A vehicle-agnostic information may otherwise be referred to as a vehicle-type-independent information. That is, the vehicle-agnostic information is not encoded in a manner specific to the vehicle or vehicle type. The vehicle-agnostic information may be provided in a format known to the remote device 110. Nevertheless, the vehicle-agnostic information processed by the processor assembly 120 may be information that is encoded in a vehicle-agnostic manner but still includes vehicle-specific content, parameters and/or characteristics.

The second processor 124 is configured to provide the vehicle-agnostic information to the remote device 110. The second processor 124 may provide the vehicle-agnostic information to the remote device 110 via a communication unit, which may form part of the processor assembly 120 or may be a separate unit.

The remote device 110 may comprise a communication unit 114 operable to receive the vehicle-agnostic information from the second processor 124.

The remote device 110 is configured to receive the vehicle-agnostic information from the processor assembly 120. The remote device 110 may be configured to receive vehicle-agnostic information from the first processor 122 and second processor 124 individually (i.e., rather than from the processor assembly 120 as a whole). The remote device 110 may be configured to receive vehicle-agnostic information from the first processor 122 and second processor 124 simultaneously. Additionally, or alternatively, the remote device 110 may be configured to receive vehicle-agnostic information from the first processor 122 and second processor 124 at separate (e.g., distinct) times. As an example, when a safety driver is monitoring the first vehicle 200a at a first point in time, the remote device 110 may receive vehicle-agnostic information from the first processor 122 at the first point in time, and, subsequently, when the safety driver is monitoring the second vehicle 200b at a second point in time, the remote device 110 may receive vehicle-agnostic information from the second processor 124 at the second point in time.

The remote device 110 is operable to provide output to a user without processing data related to the vehicle (that is, either, or both, the first vehicle 200a and second vehicle 200b). The remote device 110 may be operable to provide output to a user without decoding or handling information from the processor assembly 120 based on the vehicle or vehicle type at which a processor is provided. A fleet of vehicles may include a plurality of different vehicle types, and thus the remote device 110 is operable to provide output to the user without itself handling the information based on vehicle type. In one example, the format of the vehicle-agnostic information provided to the remote device 110 may be standardised, such that the remote device 110 need not handle or decode the information in a vehicle-specific manner.

The data related to the vehicle 200a, 200b is the autonomy condition of the vehicle.

Advantageously, in this way, the autonomy condition can be communicated to the user in a vehicle-agnostic manner. The user can thus understand the autonomy condition of the vehicle 200a, 200b, without the remote device 110 handling such information in a manner specific to the vehicle type. The processor 122, 124 may process the autonomy condition to obtain a vehicle-agnostic information related to the autonomy condition of the vehicle 200a, 200b.

The autonomy condition may be an off condition. For example, the off condition may be a condition in which the vehicle is not operational, in either autonomous or non-autonomous condition, state, or mode. In the off condition, the vehicle may be turned off, or be in a condition that it cannot be operated to move. In the off condition, the vehicle may be stationary.

The autonomy condition may be an autonomous (e.g. autonomous control) condition. For example, the autonomous condition may be a condition in which the vehicle is autonomously operational. In the autonomous condition, the vehicle may be operational without a user input, e.g., from a driver, occupant of the vehicle, or remote operator. That is, in the autonomy condition, the vehicle may be driving autonomously.

The autonomy condition may be a non-autonomous (e.g. non-autonomous control) condition. For example, the non-autonomous condition may be a condition in which the vehicle is non-autonomously operational. That is, in the non-autonomous condition, the vehicle may be operational with a user input, e.g., from a driver, occupant of the vehicle, or remote operator (such as a safety driver). In the non-autonomous condition, the vehicle may be configured to receive user input. That is, in the non-autonomous condition, the vehicle may be driven non-autonomously.

The autonomy condition may be an emergency braking condition, which may be an autonomous emergency braking condition or a non-autonomous emergency braking condition. In the emergency braking condition, the vehicle may be braking to a stop in a given distance, before a defined point in space, or in as short a time as possible. The emergency braking condition may be initiated autonomously by the vehicle, or by (at least partial non-autonomous) user input. In the autonomous emergency braking condition, the vehicle may be operational without a user input, and the emergency braking condition initiated autonomously by the vehicle, or by user input. In the non-autonomous emergency braking condition, the vehicle may be operational with a user input, and the emergency braking condition may be initiated by a user input, or autonomously by the vehicle.

The autonomy condition may be a ready-to-move condition, which may be an autonomous ready-to-move condition or a non-autonomous ready-to-move condition. In the ready-to-move condition, the vehicle may be ready to move. That is, the vehicle may be about to accelerate, for example from a standing start, such as at a traffic light. In the autonomous ready-to-move condition, the vehicle may be operational without a user input, as described above. In the non-autonomous ready-to-move condition, the vehicle may be operational with a user input, as described above.

The vehicle-agnostic information provided as output to the user may communicate, or indicate, the user that autonomy is available. That is, the user may receive an output that the vehicle 200a, 200b may be operated in an autonomous condition, as described above.

The data may be provided by a safety system 210a, 210b of the vehicle 200a, 200b. The safety system 210a, 210b may provide an output based on the autonomy condition. The safety system 210a, 210b may also provide other data relating to operation of the vehicle 200a, 200b.

In this way, data relating to vehicle operation can be communicated to the user without the remote device 110 handling information in a vehicle-specific manner.

The vehicle-agnostic information provided to the remote device 110 may include heartbeat, heartbeat timing information and/or pairing status. The pairing status may be a handshake between the processor assembly 120 (including individual first processor 122 and second processor 124) and the remote device 110. The handshake may involve the exchange of login information, vehicle details and/or version information.

The output provided by the remote device 110 may include a displayed content, which may include one or more of: a primary text layer; secondary text layer; overlay or status layer, optionally used for vehicle-specific details, such as indication of a training mode; text and background layer colour commands; requests to play alert sounds, for example for error displays.

The output provided by the remote device 110 may be of a first kind. In this way, a first kind of output is receivable by the user, thus facilitating understanding of vehicle operation. The first kind may be a primary text layer. In an example, the primary text layer may indicate to the user that an autonomous condition is currently available to be initiated.

The output provided by the remote device 110 may be of a second kind. In this way, a second kind of output is receivable by the user, thus facilitating understanding of vehicle operation, a state of the vehicle, and may further enable interaction and/or control of the state of the vehicle. The second kind may request user input. The second kind may enable user interaction, or instruction. The second kind may be a secondary text layer.

The first vehicle 200a and/or second vehicle 200b is an autonomous vehicle (AV).

Such a system is highly advantageous. AVs may provide rich data relating to many different sub-systems of the AV and operating conditions of the AV. In the present system, output can be provided to the user without processing said data in a vehicle-specific manner, thus enabling use of a single vehicle-agnostic remote device 110 for a fleet of different types of vehicles (including one or more AVs) and reducing processing (including reducing required processing power) at the remote device 110.

The first vehicle 200a and/or second vehicle 200b may be different vehicle types. That is, the first vehicle 200a may be a first type, and the second vehicle 200b may be a second type. As described above, the data may be processed to provide vehicle-type-independent information to the remote device. In this way, despite the vehicles being of different types, the remote device 110 need not process the data based on the vehicle type, as the processing of the data takes place vehicle-side, and vehicle-agnostic information (e.g., vehicle-type-agnostic) information is provided to the remote device 110. Processing power required at the remote device 110 is thus reduced. Furthermore, the remote device 110 need not know the specific vehicle type from which the information is received. Additionally, a single remote device 110 can be employed to receive information from vehicles of a plurality of different types, thus enabling use of a single remote device 110 across a fleet consisting of different vehicle types.

The vehicle type may be an on-road AV and/or an off-road AV. In an example, the first vehicle 200a may be an on-road AV and the second vehicle 200b may be an off-road AV. In this way, despite the data related to the respective vehicle differing due to the different vehicle types (on-road vs off-road AVs), the data can be processed to obtain vehicle-agnostic information for communication to the user.

The system may comprise one or more on-road AVs and/or one or more off-road AVs. That is, the system itself may comprise one or more vehicles, at which the processors 122, 124 are adapted to be provided.

The remote device 110 may comprise a controller 116. The controller 116 may be configured to process a user input at the remote device 110. The controller 116 may be configured to provide a vehicle-agnostic information based on the user input to the processor assembly 120.

Advantageously, in this way, a user (such as a safety driver) may confirm or initiate an action through the remote device 110. The user may interact with the remote device 110 via the user interface 112. Furthermore, in this way, the user input providing a vehicle-agnostic information based on the user input enables the user to interact with the processor assembly 120 to provide information thereto irrespective of vehicle type. The vehicle-agnostic information provided to the processor assembly 120 may be a vehicle-agnostic instruction or vehicle-agnostic input. Furthermore, an action may be confirmed or initiated through the remote device 110 without use of vehicle controls, such as steering wheel buttons. The vehicle may thus be remotely controlled.

The controller 116 may be configured to provide the vehicle-agnostic information based on the user input to one or both of the first processor 122 and second processor 124. The controller 116 may be configured to provide the vehicle-agnostic information based on the user input to the first processor 122 and second processor 124 simultaneously, or at different (e.g., distinct) points in time.

The vehicle-agnostic information based on user input provided to the processor assembly 120 may be used to control the respective vehicle. That is, where vehicle-agnostic information based on user input is provided to the first processor 122, the vehicle-agnostic information may be a first vehicle-agnostic information, and the first vehicle-agnostic information may be used to control the first vehicle 200a. In an example, the first vehicle-agnostic information may be used to control the first vehicle 200a by interacting with a sub-system of the first vehicle 200a, such as a safety system 210a. Furthermore, where vehicle-agnostic information based on user input is provided to the second processor 124, the vehicle-agnostic information may be a second vehicle-agnostic information, and the second vehicle-agnostic information may be used to control the second vehicle 200b. In an example, the second vehicle-agnostic information may be used to control the second vehicle 200b by interacting with a sub-system of the second vehicle 200b, such as a safety system 210b.

The vehicle-agnostic information based on user input provided to the processor assembly 120 may include one or more of: accepting, rejecting and/or selecting a routing task; interacting with an AV payload; arming (e.g., activating) and/or disarming (e.g., deactivating) an external emergency stop system.

In these cases, the input required may need to be related to the vehicle, and the use of vehicle-agnostic information can lead to the generation of an input related to the vehicle. The user input through the remote device 110 may enable the provision of feedback through the remote device 110 to the safety system 210a, 210b, or other vehicle sub-system, to report: if the user is interacting with an output of a second kind, and which outputs of a second kind; and/or the nature of the interaction with an output of a second kind (for example, a touch, swipe, or hold, or the like).

The processor assembly 120 may be configured to receive the vehicle agnostic information from the remote device 110 and process an input related to the vehicle based on the vehicle-agnostic information from the remote device 110.

Advantageously, in this way, vehicle-agnostic information from the device 110 can be processed at the vehicle-side, to provide an input related to the vehicle (e.g., a vehicle-type-specific input). That is, a vehicle-agnostic information can be processed to provide a vehicle-specific input. In this way, the remote device 110 itself does not need to process the information in a manner specific to the vehicle at which the processor 122, 124 is to be provided. Instead, such processing occurs vehicle-side. In this way, processing power required at the remote device 110 is reduced. Furthermore, a single remote device 110 can be used to provide information to, and generate resulting inputs at, a fleet of vehicles irrespective of and independent of the vehicle type.

In an example, the remote device 110 may be configured to: process a user input; and provide a vehicle-agnostic information based on the user input to the processor assembly 120. In the processor assembly 120, the first processor 122 may be configured to: receive the vehicle-agnostic information from the remote device 110; process an input related to the first vehicle 200a based on the vehicle-agnostic information from the remote device 110. In the processor assembly 120, the second processor 124 may be configured to: receive the vehicle-agnostic information from the remote device 110; process an input related to the second vehicle 200b based on the vehicle-agnostic information from the remote device 110.

In this way, the remote device 110 is operable to provide information to the vehicle 200a, 200b without processing the user input based on the vehicle 200a, 200b. As a result, processing power required of the remote device 110 is reduced as the remote device 110 need not process the user input in a vehicle-specific manner. Furthermore, this enables use of a single remote device 110 to provide input to a fleet of vehicles of different vehicle types.

In summary, the full functionality of the system 100 is such that, from a processor assembly 120 to a remote device 110, vehicle-specific information may be provided to the remote device 110 from the processor assembly 120 as vehicle-agnostic information (e.g., information in a vehicle-agnostic format), and, from the remote device 110 to the processor assembly 120, the remote device 110 may provide vehicle-agnostic information to the processor assembly 120 to process an input related to the vehicle (e.g., in a vehicle-specific manner).

Referring to Figure 2, the processor assembly 120 is shown in isolation. The processor assembly 120 is for a system for providing output to a user of a remote device 110 configured to receive the vehicle-agnostic information from the processor assembly 120 and provide an output to the user based on said information. That is, the processor assembly 120 is for a system 100 as described above.

The processor assembly 120 comprises a first processor 122 adapted to be provided at a first vehicle 200a. The first processor 122 is configured to: receive data related to the first vehicle 200a; process the data to obtain a vehicle-agnostic information; provide the vehicle-agnostic information to the remote device 110.

The processor assembly 120 comprises a second processor 124 adapted to be provided at a second vehicle 200b, the second processor 124 configured to: receive data related to the second vehicle 200b; process the data to obtain a vehicle-agnostic information; provide the vehicle-agnostic information to the remote device 110.

Referring to Figure 3, the remote device 110 is shown in isolation. The remote device 110 is for a system for providing output to a user of the remote device 110. That is, the remote device is for a system 100 as described above.

The remote device 110 is configured to receive vehicle-agnostic information from a processor assembly 120 and provide an output to the user based on said information, such that the remote device 110 is operable to provide output to a user without processing data related to a vehicle 200a, 200b.

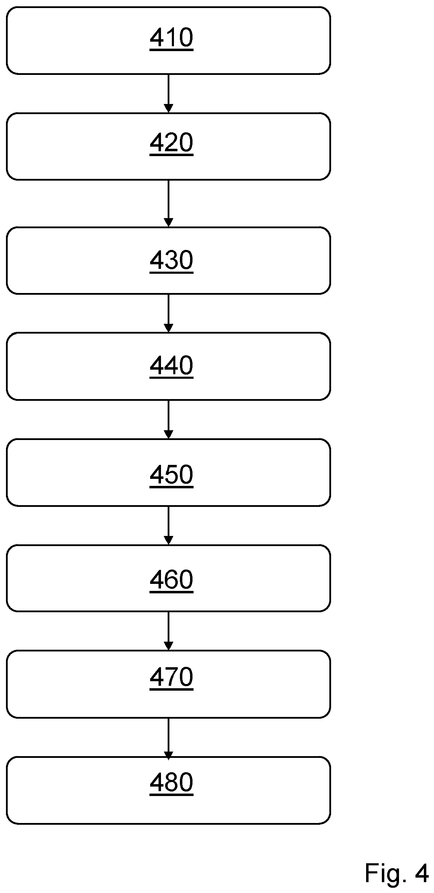

Referring to Figure 4, a method of providing output to a user of a remote device 110 is shown. The remote device 110 is operable to provide output to a user without processing data related to a vehicle 200a, 200b. Step 410 comprises receiving data related to a first vehicle 200a at a first processor 122 of a processor assembly 120, the first processor 122 adapted to be provided at the first vehicle 200a. Step 420 comprises processing the data at the first processor 122 to obtain a vehicle-agnostic information. Step 430 comprises providing the vehicle-agnostic information from the first processor 122 to the remote device 110. Step 440 comprises receiving data related to a second vehicle 200b at a second processor 124 of the processor assembly 120, the second processor 124 adapted to be provided at the second vehicle 200b. Step 450 comprises processing the data at the second processor 124 to obtain a vehicle-agnostic information. Step 460 comprises providing the vehicle-agnostic information from the second processor 124 to the remote device 110. Step 470 comprises receiving the vehicle-agnostic information from the processor assembly 120. Step 480 comprises providing an output to the user based on the vehicle-agnostic information.

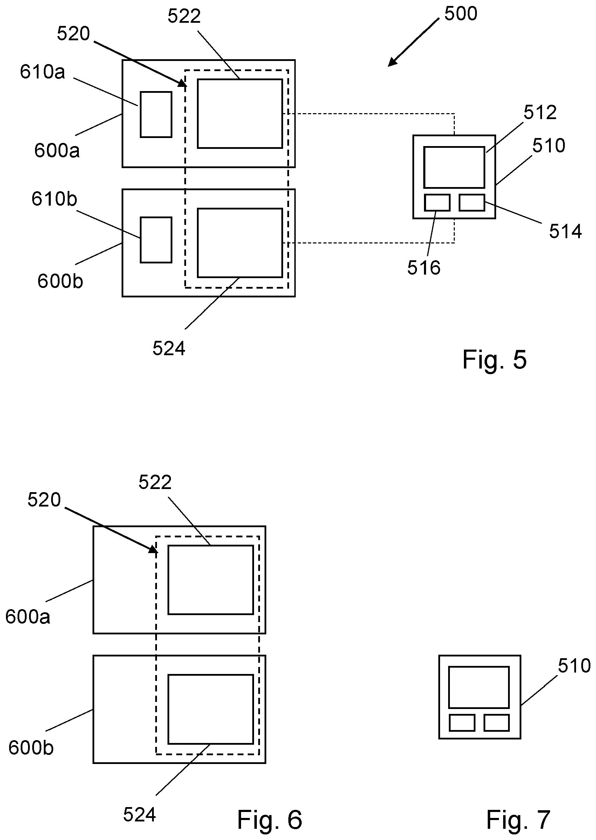

Referring to Figure 5, a system 500 is shown. The system 500 is for providing input to a processor assembly from a remote device.

The system 500 may include any or all of the features of system 100 described above. Description of the system 100 above may be imported into the description of the system 500 provided here, in particular definitions of certain terms and functionality. Indeed, it is intended, and highly advantageous, that the system 500 and the system 100 are the same system. The system 100 may provide output to a user of a remote device, and the system 500 may provide input to a processor assembly from a remote device. It will be apparent to the skilled person that a single system may be provided and configured to perform the functions of system 100 and system 500. Nevertheless, the system 500 is described in isolation of the system 100, as benefits of the invention may be obtained by providing each system 100, 500 independently. It will be appreciated by the skilled person that features of system 100 and system 500 may be combined and/or incorporated into one another.

The system 500 comprises a remote device 510 and a processor assembly 520. The processor assembly 520 comprises a first processor 522 and a second processor 524.

The remote device 510 is configured to process a user input. The remote device 510 is configured to provide a vehicle-agnostic information based on the user input to the processor assembly 520.

The first processor 522 is adapted to be provided at a first vehicle 600a. The first processor 522 is configured to receive the vehicle-agnostic information from the remote device 510. The first processor 522 is configured to process an input related to the first vehicle 600a based on the vehicle-agnostic information from the remote device 510.

The second processor 524 is adapted to be provided at a second vehicle 600b. The second processor 524 is configured to receive the vehicle-agnostic information from the remote device 510. The second processor 524 is configured to process an input related to the second vehicle 600b based on the vehicle-agnostic information from the remote device 510. In this way, the remote device 510 is operable to provide information (e.g., as an input) to the vehicle 600a, 600b without processing the input based on the vehicle 600a, 600b. In other words, providing information without processing input "based on a vehicle" may be said to be the provision of information to the vehicle 600a, 600b without processing the input in a manner that is specific to any particular vehicle. This will be appreciated by the skilled person from the description herein.

Advantageously, by such a system, vehicle-agnostic information from the device 510 can be processed at the vehicle-side, to provide an input related to the vehicle 600a, 600b (e.g., a vehicle-type-specific input). That is, a vehicle-agnostic information can be processed to provide a vehicle-specific input. In this way, the remote device 510 itself does not need to process the information in a manner specific to the vehicle at which the processor 522, 524 is to be provided. Instead, such processing occurs vehicle-side. In this way, processing power required at the remote device 510 is reduced. Furthermore, a single remote device 510 can be used to provide information to, and generate resulting inputs at, a fleet of vehicles irrespective of and independent of the vehicle type.

The remote device 510 may include at least one of, for example, a smartphone, a tablet personal computer (PC), a mobile phone, a desktop personal computer (PC), a laptop personal computer (PC), or a wearable device.

The remote device 510 may provide a user interface (UI) through which the user may interact with the remote device 510. The remote device 510 may support a mobile application (referred to as an "app") with which the user interacts. The remote device 510 may comprise a screen 512 by which the user may interact with the app.

The first processor 522 is adapted to be provided at a first vehicle 600a. The first processor 522 may be provided at the first vehicle 600a. The first processor 522 may be provided at the first vehicle 600a by being incorporated therein.

The first processor 522 is configured to receive the vehicle-agnostic information from the remote device 510. The first processor 522 may comprise a communication unit for receiving the vehicle-agnostic information. The communication unit may form part of the processor assembly 520 or may be a separate unit. The first processor 522 may receive the vehicle-agnostic information from the remote device 510 wirelessly or via a wired connection.

The first processor 522 is configured to process an input related to the first vehicle 600a based on the vehicle-agnostic information from the remote device 510. In other words, the first processor 522 is configured to process, or generate, an input which may be specific to the vehicle or vehicle type, based on vehicle-agnostic information. A vehicle-agnostic information may otherwise be referred to as a vehicle-type-independent information. That is, the vehicle-agnostic information is not encoded in a manner specific to the vehicle or vehicle type. The vehicle-agnostic information may be provided in a format known to the first processor 522. Nevertheless, the vehicle-agnostic information processed by the processor assembly 520 may be information that is encoded in a vehicle-agnostic manner but still includes vehicle-specific content, parameters and/or characteristics.

The remote device 510 may comprise a communication unit 514 operable to provide the vehicle-agnostic information to the processor assembly 520. The communication unit 514 may be operable to provide the vehicle-agnostic information to the first processor 522.

The second processor 524 is adapted to be provided at a second vehicle 600b. The second processor 524 may be provided at the second vehicle 600b. The second processor 524 may be provided at the second vehicle 600b by being incorporated therein.

The second processor 524 is configured to receive the vehicle-agnostic information from the remote device 510. The second processor 524 may comprise a communication unit for receiving the vehicle-agnostic information. The communication unit may form part of the processor assembly 520 or may be a separate unit. The second processor 524 may receive the vehicle-agnostic information from the remote device 510 wirelessly or via a wired connection.

The second processor 524 is configured to process an input related to the second vehicle 600b based on the vehicle-agnostic information from the remote device 510. In other words, the second processor 524 is configured to process, or generate, an input which may be specific to the vehicle or vehicle type, based on vehicle-agnostic information. A vehicle-agnostic information may otherwise be referred to as a vehicle-type-independent information. That is, the vehicle-agnostic information is not encoded in a manner specific to the vehicle or vehicle type. The vehicle-agnostic information may be provided in a format known to the second processor 524. Nevertheless, the vehicle-agnostic information processed by the processor assembly 520 may be information that is encoded in a vehicle-agnostic manner but still includes vehicle-specific content, parameters and/or characteristics.

The remote device 510 may comprise a communication unit 514 operable to provide the vehicle-agnostic information to the processor assembly 520. The communication unit 514 may be operable to provide the vehicle-agnostic information to the second processor 524.

The remote device 510 is configured to provide the vehicle-agnostic information to the processor assembly 520. The remote device 510 may be configured to provide vehicle-agnostic information to the first processor 522 and second processor 524 individually (i.e., rather than to the processor assembly 520 as a whole). The remote device 510 may be configured to provide vehicle-agnostic information to the first processor 522 and second processor 524 simultaneously. Additionally, or alternatively, the remote device 510 may be configured to provide vehicle-agnostic information to the first processor 522 and second processor 524 at separate (e.g., distinct) times. As an example, when a safety driver is monitoring the first vehicle 600a at a first point in time and provides a user input, the remote device 510 may provide vehicle-agnostic information based on the user input to the first processor 522 at the first point in time, and, subsequently, when the safety driver is monitoring the second vehicle 600b at a second point in time and provides a user input, the remote device 510 may provide vehicle-agnostic information based on the user input to the second processor 524 at the second point in time.

The remote device 510 is operable to provide information to the vehicle 600a, 600b without processing the input based on the vehicle 600a, 600b (that is, either, or both, the first vehicle 600a and second vehicle 600b). The remote device 510 may be operable to provide information to the vehicle 600a, 600b without encoding or handling the input based on the vehicle or vehicle type at which a processor is provided. A fleet of vehicles may include a plurality of different vehicle types, and thus the remote device 510 is operable to provide information to the vehicle without itself handling the information based on vehicle type. In one example, the format of the vehicle-agnostic information provided to the processor assembly 520 may be standardised, such that the remote device 510 need not handle or encode the information in a vehicle-specific manner.

The input related to the vehicle 600a, 600b based on the vehicle-agnostic information from the remote device 510 may be used in control the vehicle.

In this way, the vehicle 600a, 600b may be controlled without the remote device 510 providing a control signal that is based on the vehicle or vehicle type that it is desired to control.

In one example, the input related to the vehicle 600a, 600b based on the vehicle-agnostic information from the remote device may be used in control of autonomy condition of the vehicle 600a, 600b.

Advantageously, in this way, the autonomy condition can be controlled in a vehicle-agnostic manner. The user can thus control the autonomy condition of the vehicle 600a, 600b without the remote device 510 handling such information in a manner specific to the vehicle type. The processor 522, 524 may process an input to control the autonomy condition of the vehicle 600a, 600b based on the vehicle-agnostic information from the remote device 510.

Details of the autonomy condition are the same as described above, and will not be repeated here for brevity. In summary, the autonomy condition may be an off condition, an autonomous (e.g. autonomous control) condition, a non-autonomous (e.g. non-autonomous control) condition, an emergency braking condition and/or a ready-to-move condition.

The autonomy condition may alternatively, or additionally, be described as a level of autonomy, or state of autonomy. In at least some examples, this may be differentiated from remote control of the vehicle, but may be considered to be a higher level, or more abstracted, level or state of autonomy. In an example, the vehicle may be controlled to be provided in an autonomous condition, and then in said autonomous condition determine suitable driving or actuating controls based on situational factors (e.g., receive additional control input for driving). Similarly, in a related example, the vehicle may be controlled to be provided in a non-autonomous condition, and in said non-autonomous condition be controlled by a human operator (e.g., receive additional control input for driving). That is, in an example, it is the setting of the autonomy condition that may be performed in a vehicle-agnostic manner as described herein. Whilst the driving or actuating control of the vehicle may be performed, in some examples, in a vehicle-agnostic manner, by examples of the present invention the autonomy condition itself may be set or configured in a vehicle-agnostic manner. This subtle distinction is highly advantageous for numerous reasons, as discussed herein and as will be understood by the skilled person in the field. In this way, improved control of the vehicle, and a fleet of vehicles, is provided.

The user input may be a request for a certain autonomy condition. That is, the user may select an autonomy condition for the vehicle 600a, 600b and a vehicle-agnostic information may be provided to the processor assembly 520 and an input to select a certain autonomy condition may be processed at the vehicle 600a, 600b.

The input related to the vehicle 600a, 600b based on the vehicle-agnostic information from the remote device 510 may be provided to a safety system 610a, 610b of the vehicle 600a, 600b. The safety system 610a, 610b may control the autonomy condition of the vehicle 600a, 600b. The safety system 610a, 610b may also control other operational features of the vehicle 600a, 600b.

In this way, the vehicle operation can be controlled by the user at the remote device 510 without the remote device 510 handling information or input in a vehicle-specific manner.

The remote device 510 may comprise a controller 516. The controller 516 may be configured to process a user input at the remote device 510. The controller 516 may be configured to provide a vehicle-agnostic information based on the user input to the processor assembly 520.

Advantageously, in this way, a user (such as a safety driver) may confirm or initiate an action through the remote device 510. The user may interact with the remote device 510 via the user interface 512. Furthermore, in this way, the user input providing a vehicle-agnostic information based on the user input enables the user to interact with the processor assembly 520 to provide information thereto irrespective of vehicle type. The vehicle-agnostic information provided to the processor assembly 520 may be a vehicle-agnostic instruction or vehicle-agnostic input. Furthermore, an action may be confirmed or initiated through the remote device 510 without use of vehicle controls, such as steering wheel buttons. The vehicle may thus be remotely controlled.

The controller 516 may be configured to provide the vehicle-agnostic information based on the user input to one or both of the first processor 522 and second processor 524. The controller 516 may be configured to provide the vehicle-agnostic information based on the user input to the first processor 122 and second processor 524 simultaneously, or at different (e.g., distinct) points in time.

The vehicle-agnostic information based on user input provided to the processor assembly 520 may be used to control the respective vehicle. That is, where vehicle-agnostic information based on user input is provided to the first processor 522, the vehicle-agnostic information may be a first vehicle-agnostic information, and the first vehicle-agnostic information may be used to control the first vehicle 600a. In an example, the first vehicle-agnostic information may be used to control the first vehicle 600a by interacting with a sub-system of the first vehicle 600a, such as a safety system 610a. Furthermore, where vehicle-agnostic information based on user input is provided to the second processor 524, the vehicle-agnostic information may be a second vehicle-agnostic information, and the second vehicle-agnostic information may be used to control the second vehicle 600b. In an example, the second vehicle-agnostic information may be used to control the second vehicle 600b by interacting with a sub-system of the second vehicle 600b, such as a safety system 610b.

The vehicle-agnostic information based on user input provided to the processor assembly 520 may include one or more of: accepting, rejecting and/or selecting a routing task; interacting with an AV payload; arming (e.g., activating) and/or disarming (e.g., deactivating) an external emergency stop system.

In these cases, the input required may need to be related to the vehicle, and the use of vehicle-agnostic information can lead to the generation of an input related to the vehicle. The user input through the remote device 510 may enable the provision of feedback through the remote device 510 to the safety system 610a, 610b, or other vehicle sub-system, to report: if the user is interacting with an output of a second kind, and which outputs of a second kind; and/or the nature of the interaction with an output of a second kind (for example, a touch, swipe, or hold, or the like).

The user input may be generated by interaction with a second kind of output at the remote device 510. A second kind of output at the remote device 510 may facilitate understanding of vehicle operation, a state of the vehicle, and further enables interaction and/or control of the state of the vehicle. The second kind of output may request user input. The second kind of output may enable user interaction or instruction. The second kind of output may be a secondary text layer. The user may interact with the second kind of output to provide a user input, following vehicle a vehicle-agnostic information based on the interaction can be provided to the processor assembly 520. In this way, the user can provide a control signal to the vehicles 600a, 600b.

The first vehicle 600a and/or second vehicle 600b may be an autonomous vehicle, AV.

Such a system is highly advantageous. AVs may provide rich data relating to many different sub-systems of the AV and operating conditions of the AV. Furthermore, AVs may be well suited to using inputs, such as control inputs. In the present system, input related to the vehicle 600a, 600b can be processed without processing the user input at the remote device 510 in a vehicle-specific manner, thus enabling use of a single vehicle-agnostic remote device 510 for a fleet of different types of vehicles (including one or more AVs) and reducing processing (including reducing processing power) at the remote device 510.

The first vehicle 600a and/or second vehicle 600b may be different vehicle types. That is, the first vehicle 600a may be a first type, and the second vehicle 600b may be a second type. As described above, the user input may be processed at the remote device 510 to provide vehicle-type-independent information to the processor assembly 520. In this way, despite the vehicles being of different types, the remote device 510 need not process the data based on the vehicle type, as the processing of the data takes place vehicle-side, and vehicle-agnostic information (e.g., vehicle-type-agnostic) information is provided to the processor assembly 520. Processing power required at the remote device 510 is thus reduced. Furthermore, the remote device 510 need not know the specific vehicle type which the information is sent, passed, or communicated to. Additionally, a single remote device 510 can be employed to provide information to vehicles of a plurality of different types, thus enabling use of a single remote device 510 across a fleet consisting of different vehicle types.

The vehicle type may be an on-road AV and/or an off-road AV. In an example, the first vehicle 600a may be an on-road AV and the second vehicle 600b may be an off-road AV. In this way, despite the input related to the vehicle 600a, 600b differing due to the different vehicle types (on-road vs off-road AVs), the input related to the vehicle can be processed (e.g., generated) based on vehicle-agnostic information. That is, the remote device 510 need not provide information to the processor assembly 520 which is specific to the vehicle type at which the processors 522, 524 are provided, thus reducing processing required at the remote device 510.

The system 500 may comprise one or more on-road AVs and/or one or more off-road AVs. That is, the system itself may comprise one or more vehicles, at which the processors 522, 524 are adapted to be provided.

The first processor 522 may be configured to: receive data related to the first vehicle 600a; process the data to obtain a vehicle-agnostic information; and provide the vehicle-agnostic information to the remote device 510. The second processor 524 may be configured to receive data related to the second vehicle 600b; process the data to obtain a vehicle-agnostic information; and provide the vehicle-agnostic information to the remote device 510. It will be appreciated that this functionality is described above in relation to system 100.

Advantageously, by such a system, it is not necessary for the remote device 510 to process vehicle-specific data. That is, instead of reporting a vehicle-specific information (e.g., information having a characteristic specific to a vehicle or a vehicle type) to the remote device 510 which it must then decode and handle to provide an output to the user based on said information, the decision of what to display is instead performed at the processor assembly 520. In this way, the remote device 510 need not know the type of the vehicle, and need not process the data provided to it in a vehicle-specific manner. This enables use of the richer information that the vehicle has about the interaction it requires with the user. Furthermore, this provides the advantage that the same remote device 510 can be used irrespective of types of vehicles in a vehicle fleet, such that the output is provided in a consistent manner to a user regardless of vehicle type, and a fleet of vehicles of a plurality of different types can be operated and monitored using the same remote device 510. Furthermore, the output is provided in a consistent manner to a user regardless of vehicle type and without compromising the relevance of the data being passed between the vehicle and the user.

The vehicle-agnostic information may be a different information, whilst still being vehicle-agnostic. That is, in an example, the vehicle-agnostic information provided by the remote device 510 to the processor assembly 520 is based on the user input, whilst the vehicle-agnostic information provided by the processor assembly 520 to the remote device 510 is based on data related to the vehicle 600a, 600b. In one example, vehicle-agnostic information provided by the remote device 510 to the processor assembly 520 is the selection of an autonomy condition, whilst the vehicle-agnostic information provided by the processor assembly 520 to the remote device 510 is an indication that the vehicle is operating according to a selected autonomy condition. In general, the vehicle-agnostic information provided by the remote device 510 to the processor assembly 520 may be referred to as a "first vehicle-agnostic information" or "first type of vehicle-agnostic information", and the vehicle-agnostic information provided by the processor assembly 520 to the remote device 510 may be referred to as a "second vehicle-agnostic information" or "second type of vehicle-agnostic information", or vice versa.

The remote device 510 may be configured to receive the vehicle-agnostic information from the processor assembly 520 and provide an output to the user based on said information, such that the remote device 510 is operable to provide output to a user without processing data related to the vehicle 600a, 600b. It will be appreciated that this functionality is described above in relation to system 100.

Advantageously, in this way, output to the user is provided by the remote device 510 without the remote device 510 itself handling the information based on vehicle type. In one example, the format of the vehicle-agnostic information provided to the remote device 510 may be standardised, such that the remote device 510 need not handle or decode the information in a vehicle-specific manner. Therefore, the remote device 510 need not perform complex processing based on vehicle or vehicle type.

In summary, the full functionality of the system 500 is such that, from a remote device 510 to a processor assembly 520, vehicle-agnostic information (e.g., information in a vehicle-agnostic format) is provided based on user input to process an input related to the vehicle based on the vehicle-agnostic information, and, from the processor assembly 520 to the remote device 510, data related to the vehicle (e.g., vehicle-specific data) may be provided to the remote device 510 as vehicle-agnostic information.

Referring to Figure 6, the processor assembly 520 is shown in isolation. The processor assembly 520 is for a system for providing input to a processor assembly 520 from a remote device 510 configured to process a user input and provide a vehicle-agnostic information based on the user-input to the processor assembly 520, or for receiving input from a remote device 510 configured to process a user input and provide a vehicle-agnostic information based on the user-input to the processor assembly 520. That is, the processor assembly 520 is for a system 500 as described above.

The processor assembly 520 comprises a first processor 522 adapted to be provided at a first vehicle 600a. The first processor 522 is configured to: receive vehicle agnostic information from the remote device 510; process an input related to the first vehicle 600a based on the vehicle-agnostic information from the remote device 510.

The processor assembly 520 comprises a second processor 524 adapted to be provided at a second vehicle 600b. The second processor 524 is configured to: receive vehicle-agnostic information from the remote device 510; process an input related to the second vehicle 600b based on the vehicle-agnostic information from the remote device 510.

Referring to Figure 7, the remote device 510 is shown in isolation. The remote device 510 is for a system for providing input to a processor assembly 520 from the remote device. That is, the remote device is for a system 500 as described above.

The remote device 510 is configured to process a user input; and provide a vehicle-agnostic information based on the user input to the processor assembly 520, such that the remote device is operable to provide information to a vehicle without processing the input based on the vehicle 600a, 600b (e.g., based on the vehicle type).

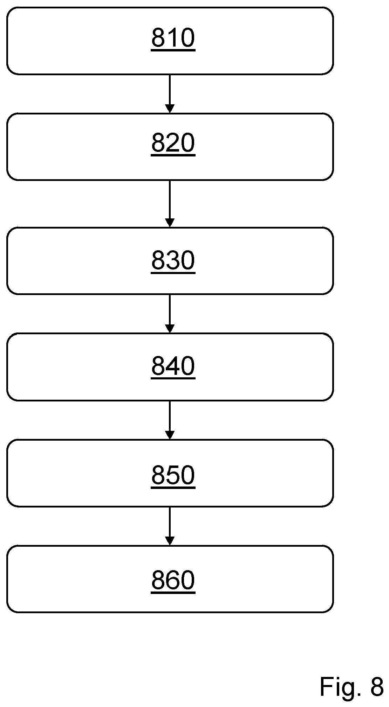

Referring to Figure 8, a method of providing input to a processor assembly 520 from a remote device 510 is shown. The remote device 510 is operable to provide information to a vehicle 600a, 600b without processing the input based on the vehicle. Step 810 comprises processing a user input at the remote device. Step 820 comprises providing a vehicle-agnostic information based on the user input from the remote device to a processor assembly comprising a first processor and a second processor. Step 830 comprises receiving the vehicle-agnostic information from the remote device at a first processor, the first processor adapted to be provided at a first vehicle. Step 840 comprises processing an input related to the first vehicle at the first processor based on the vehicle-agnostic information from the remote device. Step 850 comprises receiving the vehicle-agnostic information from the remote device at a second processor, the second processor adapted to be provided at a second vehicle. Step 860 comprises processing an input related to the second vehicle at the second processor based on the vehicle-agnostic information from the remote device.

Although a few preferred embodiments of the present invention have been shown and described, it will be appreciated by those skilled in the art that various changes and modifications might be made without departing from the scope of the invention, as defined in the appended claims.

Although the examples have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example may be combined with features of any other embodiment, as appropriate, except where such combinations are mutually exclusive. Throughout this specification, the term "comprising" or "comprises" means including the component(s) specified but not to the exclusion of the presence of others.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system (100) for providing output to a user of a remote device (110), the system (100) comprising:
a remote device (110); and
a processor assembly (120) comprising:
a first processor (122) adapted to be provided at a first autonomous vehicle (200a), the first processor (122) configured to:
receive data related to the first autonomous vehicle (200a);
process the data to obtain a vehicle-agnostic information;
provide the vehicle-agnostic information to the remote device (110); and
a second processor (124) adapted to be provided at a second autonomous vehicle (200b), the second processor (124) configured to:
receive data related to the second autonomous vehicle (200b);
process the data to obtain a vehicle-agnostic information;
provide the vehicle-agnostic information to the remote device (110),
wherein the remote device (110) is configured to receive the vehicle-agnostic information from the processor assembly (120) and provide an output to the user based on said information, such that the remote device (110) is operable to provide output to a user without processing data in a manner that is specific to any particular autonomous vehicle, and
wherein the data related to the vehicle is an autonomy condition of the autonomous vehicle.

2. The system (100) according to claim 1, wherein the data is provided by a safety system (100) of the autonomous vehicle.

3. The system according to any one of the preceding claims, wherein the output provided by the remote device (110) comprises a first kind of output.

4. The system (100) according to any one of the preceding claims, wherein the output provided by the remote device (110) comprises a second kind of output, the second kind requesting user input.

5. The system (100) according to any one of the preceding claims, wherein the first autonomous vehicle (200a) and/or second autonomous vehicle (200b) are different vehicle types.

6. The system (100) according to claim 5, wherein the vehicle type is an on-road AV and/or an off-road AV.

7. The system according to any one of the preceding claims, wherein the system (100) comprises one or more on-road AVs and/or one or more off-road AVs.

8. The system (100) according to any one of the preceding claims, wherein the remote device (110) comprises:
a controller configured to:
process a user input at the remote device (110); and
provide a vehicle-agnostic information based on the user input to the processor assembly (120).

9. The system (100) according to claim 8, wherein the processor assembly (120) is configured to:
receive the vehicle-agnostic information from the remote device (110); and
process an input related to the autonomous vehicle based on the vehicle-agnostic information from the remote device (110).

10. The system (100) according to any one of claims 1 to 9, wherein:
the remote device (110) is configured to:
process a user input; and
provide a vehicle-agnostic information based on the user input to the processor assembly (120); and
wherein, in the processor assembly (120):
the first processor (122) is configured to:
receive the vehicle-agnostic information from the remote device (110);
process an input related to the first autonomous vehicle (200a) based on the vehicle-agnostic information from the remote device (110); and
the second processor (124) is configured to:
receive the vehicle-agnostic information from the remote device (110);
process an input related to the second autonomous vehicle (200b) based on the vehicle-agnostic information from the remote device (110),
such that the remote device (110) is operable to provide information to the autonomous vehicle without processing the user input in a manner that is specific to any particular autonomous vehicle.

11. A processor assembly (120) for a system (100) for providing output to a user of a remote device (110) configured to receive vehicle-agnostic information from the processor assembly and provide an output to the user based on said information, such that the remote device is operable to provide output to the user without processing data in a manner that is specific to any particular autonomous vehicle, the processor assembly comprising:
a first processor (122) adapted to be provided at a first autonomous vehicle (200a), the first processor configured to:
receive data related to the first autonomous vehicle;
process the data to obtain a vehicle-agnostic information;
provide the vehicle-agnostic information to the remote device; and
a second processor (124) adapted to be provided at a second autonomous vehicle (200b), the second processor configured to:
receive data related to the second autonomous vehicle;
process the data to obtain a vehicle-agnostic information;
provide the vehicle-agnostic information to the remote device,
wherein the data related to the vehicle is an autonomy condition of the autonomous vehicle.

12. A remote device (110) for a system (100) for providing output to a user of the remote device, wherein the remote device is configured to receive vehicle-agnostic information from a processor assembly (120) comprising:
a first processor (122) adapted to be provided at a first autonomous vehicle (200a), the first processor configured to:
receive data related to the first autonomous vehicle;
process the data to obtain a vehicle-agnostic information;
provide the vehicle-agnostic information to the remote device; and
a second processor (124) adapted to be provided at a second autonomous vehicle (200b), the second processor configured to:
receive data related to the second autonomous vehicle;
process the data to obtain a vehicle-agnostic information;
provide the vehicle-agnostic information to the remote device,
the remote device further configured to provide an output to the user based on said information, such that the remote device (110) is operable to provide output to a user without processing data in a manner that is specific to any particular autonomous vehicle, wherein the data related to the vehicle is an autonomy condition of the autonomous vehicle.

13. A method of providing output to a user of a remote device (110), the remote device (110) being operable to provide output to a user without processing data in a manner that is specific to any particular autonomous vehicle, the method comprising:
receiving data related to a first autonomous vehicle (200a) at a first processor (122) of a processor assembly (120), the first processor (122) adapted to be provided at the first autonomous vehicle (200a);
processing the data at the first processor (122) to obtain a vehicle-agnostic information;
providing the vehicle-agnostic information from the first processor (122) to the remote device (110);
receiving data related to a second autonomous vehicle (200b) at a second processor (124) of the processor assembly (120), the second processor (124) adapted to be provided at the second autonomous vehicle (200b);
processing the data at the second processor (124) to obtain a vehicle-agnostic information;
providing the vehicle-agnostic information from the second processor (124) to the remote device (110);
receiving the vehicle-agnostic information from the processor assembly (120); and
providing an output to the user based on the vehicle-agnostic information, wherein the data related to the vehicle is an autonomy condition of the autonomous vehicle.

## Patentansprüche

1. System (100) zum Bereitstellen einer Ausgabe an einen Benutzer eines entfernten Geräts (110), wobei das System (100) umfasst:
ein entferntes Gerät (110) und
eine Prozessoranordnung (120), die umfasst:
einen ersten Prozessor (122), der dazu angepasst ist, an einem ersten autonomen Fahrzeug (200a) bereitgestellt zu werden, wobei der erste Prozessor (122) ausgelegt ist zum:
Empfangen von Daten in Bezug auf das erste autonome Fahrzeug (200a);
Verarbeiten der Daten, um eine fahrzeugagnostische Information zu erhalten;
Bereitstellen der fahrzeugagnostischen Information an das entfernte Gerät (110); und
einen zweiten Prozessor (124), der dazu angepasst ist, an einem zweiten autonomen Fahrzeug (200b) bereitgestellt zu werden, wobei der zweite Prozessor (124) ausgelegt ist zum:
Empfangen von Daten in Bezug auf das zweite autonome Fahrzeug (200b);
Verarbeiten der Daten, um eine fahrzeugagnostische Information zu erhalten;
Bereitstellen der fahrzeugagnostischen Information an das entfernte Gerät (110),
wobei das entfernte Gerät (110) dazu ausgelegt ist, die fahrzeugagnostische Information von der Prozessoranordnung (120) zu empfangen und dem Benutzer basierend auf der Information eine Ausgabe bereitzustellen, so dass das entfernte Gerät (110) betreibbar ist, um einem Benutzer eine Ausgabe bereitzustellen, ohne Daten auf eine Weise zu verarbeiten, die für ein bestimmtes autonomes Fahrzeug spezifisch ist, und
wobei die Daten in Bezug auf das Fahrzeug ein Autonomiezustand des autonomen Fahrzeugs sind.

2. System (100) nach Anspruch 1, wobei die Daten durch ein Sicherheitssystem (100) des autonomen Fahrzeugs bereitgestellt werden.

3. System nach einem der vorhergehenden Ansprüche, wobei die Ausgabe, die durch das entfernte Gerät (110) bereitgestellt wird, eine erste Art von Ausgabe umfasst.

4. System (100) nach einem der vorhergehenden Ansprüche, wobei die Ausgabe, die durch das entfernte Gerät (110) bereitgestellt wird, eine zweite Art von Ausgabe umfasst, wobei die zweite Art eine Benutzereingabe anfordert.

5. System (100) nach einem der vorhergehenden Ansprüche, wobei das erste autonome Fahrzeug (200a) und/oder das zweite autonome Fahrzeug (200b) unterschiedliche Fahrzeugtypen sind.

6. System (100) nach Anspruch 5, wobei der Fahrzeugtyp ein autonomes Fahrzeug für den Straßenverkehr und/oder ein autonomes Fahrzeug für den Geländeeinsatz ist.

7. System nach einem der vorhergehenden Ansprüche, wobei das System (100) ein oder mehrere autonome(s) Fahrzeug(e) für den Straßenverkehr und/oder ein oder mehrere autonome(s) Fahrzeug(e) für den Geländeeinsatz umfasst.

8. System (100) nach einem der vorhergehenden Ansprüche, wobei das entfernte Gerät (110) umfasst:
eine Steuerung, die ausgelegt ist zum:
Verarbeiten einer Benutzereingabe an dem entfernten Gerät (110) und
Bereitstellen einer fahrzeugagnostischen Information basierend auf der Benutzereingabe an die Prozessoranordnung (120).

9. System (100) nach Anspruch 8, wobei die Prozessoranordnung (120) ausgelegt ist zum:
Empfangen der fahrzeugagnostischen Information von dem entfernten Gerät (110) und
Verarbeiten einer Eingabe in Bezug auf das autonome Fahrzeug basierend auf der fahrzeugagnostischen Information von dem entfernten Gerät (110).

10. System (100) nach einem der Ansprüche 1 bis 9, wobei:
das entfernte Gerät (110) ausgelegt ist zum:
Verarbeiten einer Benutzereingabe und
Bereitstellen einer fahrzeugagnostischen Information basierend auf der Benutzereingabe an die Prozessoranordnung (120); und
wobei in der Prozessoranordnung (120):
der erste Prozessor (122) ausgelegt ist zum:
Empfangen der fahrzeugagnostischen Information von dem entfernten Gerät (110);
Verarbeiten einer Eingabe in Bezug auf das erste autonome Fahrzeug (200a) basierend auf der fahrzeugagnostischen Information von dem entfernten Gerät (110); und
der zweite Prozessor (124) ausgelegt ist zum:
Empfangen der fahrzeugagnostischen Information von dem entfernten Gerät (110);
Verarbeiten einer Eingabe in Bezug auf das zweite autonome Fahrzeug (200b) basierend auf der fahrzeugagnostischen Information von dem entfernten Gerät (110),
so dass das entfernte Gerät (110) betreibbar ist, um dem autonomen Fahrzeug eine Information bereitzustellen, ohne die Benutzereingabe auf eine Weise zu verarbeiten, die für ein bestimmtes autonomes Fahrzeug spezifisch ist.

11. Prozessoranordnung (120) für ein System (100) zum Bereitstellen einer Ausgabe an einen Benutzer eines entfernten Geräts (110), das dazu ausgelegt ist, eine fahrzeugagnostische Information von der Prozessoranordnung zu empfangen und dem Benutzer basierend auf der Information eine Ausgabe bereitzustellen, so dass das entfernte Gerät betreibbar ist, um dem Benutzer eine Ausgabe bereitzustellen, ohne Daten auf eine Weise zu verarbeiten, die für ein bestimmtes autonomes Fahrzeug spezifisch ist, wobei die Prozessoranordnung umfasst:
einen ersten Prozessor (122), der dazu angepasst ist, an einem ersten autonomen Fahrzeug (200a) bereitgestellt zu werden, wobei der erste Prozessor ausgelegt ist zum:
Empfangen von Daten in Bezug auf das erste autonome Fahrzeug;
Verarbeiten der Daten, um eine fahrzeugagnostische Information zu erhalten;
Bereitstellen der fahrzeugagnostischen Information an das entfernte Gerät; und
einen zweiten Prozessor (124), der dazu angepasst ist, an einem zweiten autonomen Fahrzeug (200b) bereitgestellt zu werden, wobei der zweite Prozessor ausgelegt ist zum:
Empfangen von Daten in Bezug auf das zweite autonome Fahrzeug;
Verarbeiten der Daten, um eine fahrzeugagnostische Information zu erhalten;
Bereitstellen der fahrzeugagnostischen Information an das entfernte Gerät,
wobei die Daten in Bezug auf das Fahrzeug ein Autonomiezustand des autonomen Fahrzeugs sind.

12. Entferntes Gerät (110) für ein System (100) zum Bereitstellen einer Ausgabe an einen Benutzer des entfernten Geräts, wobei das entfernte Gerät dazu ausgelegt ist, eine fahrzeugagnostische Information von einer Prozessoranordnung (120) zu empfangen, die umfasst:
einen ersten Prozessor (122), der dazu angepasst ist, an einem ersten autonomen Fahrzeug (200a) bereitgestellt zu werden, wobei der erste Prozessor ausgelegt ist zum:
Empfangen von Daten in Bezug auf das erste autonome Fahrzeug;
Verarbeiten der Daten, um eine fahrzeugagnostische Information zu erhalten;
Bereitstellen der fahrzeugagnostischen Information an das entfernte Gerät; und
einen zweiten Prozessor (124), der dazu angepasst ist, an einem zweiten autonomen Fahrzeug (200b) bereitgestellt zu werden, wobei der zweite Prozessor ausgelegt ist zum:
Empfangen von Daten in Bezug auf das zweite autonome Fahrzeug;
Verarbeiten der Daten, um eine fahrzeugagnostische Information zu erhalten;
Bereitstellen der fahrzeugagnostischen Information an das entfernte Gerät,
wobei das entfernte Gerät ferner dazu ausgelegt ist, dem Benutzer basierend auf der Information eine Ausgabe bereitzustellen, so dass das entfernte Gerät (110) betreibbar ist, um einem Benutzer eine Ausgabe bereitzustellen, ohne Daten auf eine Weise zu verarbeiten, die für ein bestimmtes autonomes Fahrzeug spezifisch ist, wobei die Daten in Bezug auf das Fahrzeug ein Autonomiezustand des autonomen Fahrzeugs sind.

13. Verfahren zum Bereitstellen einer Ausgabe an einen Benutzer eines entfernten Geräts (110), wobei das entfernte Gerät (110) betreibbar ist, um einem Benutzer eine Ausgabe bereitzustellen, ohne Daten auf eine Weise zu verarbeiten, die für ein bestimmtes autonomes Fahrzeug spezifisch ist, wobei das Verfahren umfasst:
Empfangen von Daten in Bezug auf ein erstes autonomes Fahrzeug (200a) an einem ersten Prozessor (122) einer Prozessoranordnung (120), wobei der erste Prozessor (122) dazu angepasst ist, an dem ersten autonomen Fahrzeug (200a) bereitgestellt zu werden;
Verarbeiten der Daten an dem ersten Prozessor (122), um eine fahrzeugagnostische Information zu erhalten;
Bereitstellen der fahrzeugagnostischen Information von dem ersten Prozessor (122) an das entfernte Gerät (110); Empfangen von Daten in Bezug auf ein zweites autonomes Fahrzeug (200b) an einem zweiten Prozessor (124) der Prozessoranordnung (120), wobei der zweite Prozessor (124) dazu angepasst ist, an dem zweiten autonomen Fahrzeug (200b) bereitgestellt zu werden;
Verarbeiten der Daten an dem zweiten Prozessor (124), um eine fahrzeugagnostische Information zu erhalten;
Bereitstellen der fahrzeugagnostischen Information von dem zweiten Prozessor (124) an das entfernte Gerät (110); Empfangen der fahrzeugagnostischen Information von der Prozessoranordnung (120) und
Bereitstellen einer Ausgabe an den Benutzer basierend auf der fahrzeugagnostischen Information, wobei die Daten in Bezug auf das Fahrzeug ein Autonomiezustand des autonomen Fahrzeugs sind.

## Revendications

1. Système (100) pour fournir une sortie à un utilisateur d'un dispositif à distance (110), le système (100) comprenant :
un dispositif à distance (110) ; et
un ensemble de processeurs (120) comprenant :
un premier processeur (122) adapté pour être prévu au niveau d'un premier véhicule autonome (200a), le premier processeur (122) étant configuré pour :
recevoir des données connexes au premier véhicule autonome (200a) ;
traiter les données pour obtenir une information agnostique de véhicule ;
fournir l'information agnostique de véhicule au dispositif à distance (110) ; et
un second processeur (124) adapté pour être prévu au niveau d'un second véhicule autonome (200b), le second processeur (124) étant configuré pour :
recevoir des données connexes au second véhicule autonome (200b) ;
traiter les données pour obtenir une information agnostique de véhicule ;
fournir l'information agnostique de véhicule au dispositif à distance (110),
dans lequel le dispositif à distance (110) est configuré pour recevoir l'information agnostique de véhicule en provenance de l'ensemble de processeurs (120) et fournir une sortie à l'utilisateur sur la base de ladite information, de manière telle que le dispositif à distance (110) est exploitable pour fournir une sortie à un utilisateur sans traiter de données d'une manière qui est spécifique à un quelconque véhicule autonome, et
dans lequel les données connexes au véhicule sont une condition d'autonomie du véhicule autonome.

2. Système (100) selon la revendication 1, dans lequel les données sont fournies par un système de sécurité (100) du véhicule autonome.

3. Système selon l'une quelconque des revendications précédentes, dans lequel la sortie fournie par le dispositif à distance (110) comprend un premier type de sortie.

4. Système (100) selon l'une quelconque des revendications précédentes, dans lequel la sortie fournie par le dispositif à distance (110) comprend un second type de sortie, le second type demandant une entrée utilisateur.

5. Système (100) selon l'une quelconque des revendications précédentes, dans lequel le premier véhicule autonome (200a) et/ou le second véhicule autonome (200b) sont des types de véhicule différents.

6. Système (100) selon la revendication 5, dans lequel le véhicule type est un AV sur route et/ou un AV hors route.

7. Système selon l'une quelconque des revendications précédentes, dans lequel le système (100) comprend un ou plusieurs AVs sur route et/ou un ou plusieurs AVs hors route.

8. Système (100) selon l'une quelconque des revendications précédentes, dans lequel le dispositif à distance (110) comprend :
une unité de commande configurée pour :
traiter une entrée utilisateur au niveau du dispositif à distance (110) ; et
fournir une information agnostique de véhicule sur la base de l'entrée utilisateur à l'ensemble de processeurs (120).

9. Système (100) selon la revendication 8, dans lequel l'ensemble de processeurs (120) est configuré pour :
recevoir l'information agnostique de véhicule en provenance du dispositif à distance (110) ; et
traiter une entrée connexe au véhicule autonome sur la base de l'information agnostique de véhicule en provenance du dispositif à distance (110).

10. Système (100) selon l'une quelconque des revendications 1 à 9, dans lequel :
le dispositif à distance (110) est configuré pour :
traiter une entrée utilisateur ; et
fournir une information agnostique de véhicule sur la base de l'entrée utilisateur à l'ensemble de processeurs (120) ; et
dans lequel, dans l'ensemble de processeurs (120) :
le premier processeur (122) est configuré pour :
recevoir l'information agnostique de véhicule en provenance du dispositif à distance (110) ;
traiter une entrée connexe au premier véhicule autonome (200a) sur la base de l'information agnostique de véhicule en provenance du dispositif à distance (110) ; et
le second processeur (124) est configuré pour :
recevoir l'information agnostique de véhicule en provenance du dispositif à distance (110) ;
traiter une entrée connexe au second véhicule autonome (200b) sur la base de l'information agnostique de véhicule en provenance du dispositif à distance (110), de manière telle que le dispositif à distance (110) est exploitable pour fournir une information au véhicule autonome sans traiter l'entrée utilisateur d'une manière qui est spécifique à un quelconque véhicule autonome.

11. Ensemble de processeurs (120) pour un système (100) pour fournir une sortie à un utilisateur d'un dispositif à distance (110) configuré pour recevoir une information agnostique de véhicule en provenance de l'ensemble de processeurs et fournir une sortie à l'utilisateur sur la base de ladite information, de manière telle que le dispositif à distance est exploitable pour fournir une sortie à l'utilisateur sans traiter de données d'une manière qui est spécifique à un quelconque véhicule autonome, l'ensemble de processeurs comprenant :
un premier processeur (122) adapté pour être prévu au niveau d'un premier véhicule autonome (200a), le premier processeur étant configuré pour :
recevoir des données connexes au premier véhicule autonome ;
traiter les données pour obtenir une information agnostique de véhicule ;
fournir l'information agnostique de véhicule au dispositif à distance ; et
un second processeur (124) adapté pour être prévu au niveau d'un second véhicule autonome (200b), le second processeur étant configuré pour :
recevoir des données connexes au second véhicule autonome ;
traiter les données pour obtenir une information agnostique de véhicule ;
fournir l'information agnostique de véhicule au dispositif à distance,
dans lequel les données connexes au véhicule sont une condition d'autonomie du véhicule autonome.

12. Dispositif à distance (110) pour un système (100) pour fournir une sortie à un utilisateur du dispositif à distance, dans lequel le dispositif à distance est configuré pour recevoir une information agnostique de véhicule en provenance d'un ensemble de processeurs (120) comprenant :
un premier processeur (122) adapté pour être prévu au niveau d'un premier véhicule autonome (200a), le premier processeur étant configuré pour :
recevoir des données connexes au premier véhicule autonome ;
traiter les données pour obtenir une information agnostique de véhicule ;
fournir l'information agnostique de véhicule au dispositif à distance ; et
un second processeur (124) adapté pour être prévu au niveau d'un second véhicule autonome (200b), le second processeur étant configuré pour :
recevoir des données connexes au second véhicule autonome ;
traiter les données pour obtenir une information agnostique de véhicule ;
fournir l'information agnostique de véhicule au dispositif à distance,
le dispositif à distance étant en outre configuré pour fournir une sortie à l'utilisateur sur la base de ladite information, de manière telle que le dispositif à distance (110) est exploitable pour fournir une sortie à un utilisateur sans traiter de données d'une manière qui est spécifique à un quelconque véhicule autonome, dans lequel les données connexes au véhicule sont une condition d'autonomie du véhicule autonome.

13. Procédé de fournir une sortie à un utilisateur d'un dispositif à distance (110), le dispositif à distance (110) étant exploitable pour fournir une sortie à un utilisateur sans traiter de données d'une manière qui est spécifique à un quelconque véhicule autonome, le procédé comprenant :
la réception de données connexes à un premier véhicule autonome (200a) au niveau d'un premier processeur (122) d'un ensemble de processeurs (120), le premier processeur (122) étant adapté pour être prévu au niveau du premier véhicule autonome (200a) ;
le traitement des données au niveau du premier processeur (122) pour obtenir une information agnostique de véhicule ;
la fourniture de l'information agnostique de véhicule depuis le premier processeur (122) au dispositif à distance (110) ;
la réception de données connexes à un second véhicule autonome (200b) au niveau d'un second processeur (124) de l'ensemble de processeurs (120), le second processeur (124) étant adapté pour être prévu au niveau du second véhicule autonome (200b) ;
le traitement des données au niveau du second processeur (124) pour obtenir une information agnostique de véhicule ;
la fourniture de l'information agnostique de véhicule depuis le second processeur (124) au dispositif à distance (110) ;
la réception de l'information agnostique de véhicule en provenance de l'ensemble de processeurs (120) ; et
la fourniture d'une sortie à l'utilisateur sur la base de l'information agnostique de véhicule, dans lequel les données connexes au véhicule sont une condition d'autonomie du véhicule autonome.
